# EUROPEAN PATENT APPLICATION

(11) **EP 1 970 620 A1**
(43) Date of publication of application: **17.09.2008**
(21) Application number: 07104102.4
(22) Date of filing: 14.03.2007
(51) Int. Cl.: F21V 7/00, F25D 27/00

(54) **Illumination device**

(71) Applicant: Koninklijke Philips Electronics N.V., 5621 BA Eindhoven (NL)
(72) Inventor: The designation of the inventor has not yet been filed
(74) Representative: Pet, Robert Jacob

(57) **Abstract**

An illumination device (10) comprising a totally internal reflective body (TIR-body) of transparent material (14) which hemispherically surrounds a light source (11) which is provided in a cavity (12) at a base surface (13) of the TIR-body. The TIR-body further comprises a light entrance surface (15) of the cavity facing said light source and hemispherically surrounds said light source. A reflective surface (20) opposite the entrance surface and a refractive (side) surface (19) extending between the base surface and the reflective surface are present for directing light rays originating from the light source, preferably under an acute angle α generally in between -30° to +30° with the base surface. The light entrance surface is located at a distance from the light source for allowing a first refraction of light of light rays originating from the light source upon entering the TIR-body due to the absence of optical contact between the light source and the TIR-body.

## Description

### FIELD OF THE INVENTION

The invention relates to an illumination device according to the preamble of claim 1.

The invention further relates to a freezer.

### BACKGROUND OF THE INVENTION

Such an illumination device is known from W0200107828. In today shops and/or supermarkets the products on the cupboards in shop shelf lighting and/or cold environments, for example cooling devices such as freezers, are usually illuminated with fluorescent tubes. However, among other things, the relatively poor homogeneous illumination and low power efficiency are major disadvantages of fluorescent tubes in said cold environments. It is known that in particular LEDs are beneficial as a light source for illumination in cold environments, not only with respect to power efficacy but for the total cost of ownership as well. For example, in freezers there is only 60 mm distance between the mullion and the shelf and the shelf has a width of about 800 mm, this is ratio of 1:13. Homogene illumination at this ratio is difficult to achieve with relative big bare light sources Therefore, the light emitted by the light source has to be collimated and redirected by the secondary optic. However, said known illumination device has the disadvantage that it is relatively spacious, in particular in that the total reflective body requires a lot of space while in applications like shelf-illumination in freezers the space is very limited as the light sources have to be mounted behind the door mullion.

### SUMMARY OF THE INVENTION

It is an object of the invention to provide an illumination device of the type described in the opening paragraph in which the abovementioned disadvantages are counteracted. Thereto the illumination device of the type described in the opening paragraph is characterized by the characterizing portion of claim 1. Relatively easy assemblage of the illumination device is thus enabled as the exact fit of the light source in the cavity is not required. Furthermore, the optical contact between the light source and the TIR-body as is the case in the know illumination device, is absent in the instant illumination device and offers different and at least one additional refractive step for the light rays compared to the known illumination device. In particular, in the instant illumination device the refractive step from the light rays from the light source into the cavity is a transparent material to air transition, and from the cavity into the TIR-body is an air to transparent material transition. In the known illumination device there is a transition from a first transparent material to a second transparent material, which first and second material could be the same in which case refraction does not occur at all. The at least on additional refraction step is beneficial as it renders design freedom of the TIR-body. For example, by adjusting the shape of the cavity and the position of the light source inside the cavity, the size of the TIR-body could be reduced compared to the known TIR-body. Preferably, the TIR-body is designed in such a way that light rays for the major part exits the TIR-body under the acute angle αₙ in the range of-30° to 30°, still further preferably in the range of 0° to 15° to avoid glare to observers such as, for example, shoppers. The light rays exiting the TIR-body under larger angles than ±30° are required/suitable for obtaining optimal uniformity.

An embodiment of the illumination device is characterized in that the light entrance surface is provided with a lens (structure) for pre-collimation of light originating from the light source during operation of the illumination device. The lens structure preferably is integral with the TIR-body, though this is not necessary. As a result of this lens (structure) the size of the TIR-body can be reduced even further in that the reflective surface can be kept relatively small.

Another embodiment of the illumination device is characterized in that the lens (structure) is convex and is provided on a wall of the light entrance surface opposite the base, enabling not only a significant reduction of the size of the reflective surface of the TIR-body, and hence of the TIR-body itself, but, enabling an improved collimation of the light rays exiting the TIR-body as well.

Yet another embodiment of the illumination device is characterized in that the light source is a LED. To enable excellent collimation of the light rays, the size of the light source should be as small as possible. Suitable light sources are, for example, small halogen lamps, compact (short arc) high-pressure discharge lamps or LEDs. As LEDs generate relatively little heat, they are particularly suitable as light sources in environments that should be maintained relatively cool, for example in freezers.

A yet other embodiment of the illumination device is characterized in that the LED is a (white) LED having an emission spectrum during operation which has a color temperature in the range of 2500K to 10000K, preferably an emission spectrum during operation which is according to a daylight spectrum in the range of 4000K to 6500K. In particular for the presentation/display of goods, for example food(ware), it is relevant that the appearance of said food ware under the artificial light of the illumination device of the invention is close in resemblance to the appearance of said food ware under natural daylight. However, dependent on the use purpose of the illumination device the light source may have other emission spectra. In that respect preferred are LEDs that during operation emits a color spectrum chosen from the group consisting of red, green, blue and amber. Amber is specifically used in automotive applications. Red, green and blue LEDs together build a color triangle, possibly combinable with white LEDs for better color rendering. By combining these LEDs and choosing their intensities, it is enabled to choose any desired color that is within said color triangle, for example color temperatures in the range of 2500K to 10000K.

A yet still other embodiment of the illumination device is characterized in that the base is in thermal connection with a cooling device, preferably a heat pipe or a peltier element. As LEDs do generate some heat as well, this heat should be led away from locations where it is undesired, for example in freezers. In particular heat pipes and peltier elements give efficient and effective cooling.

A preferred embodiment of the illumination device wherein the refractive surface comprises a first and a second surface, the first surface is curved and extends from the base surface to the second surface, the second surface extend from the first surface to the reflective surface, is characterized in that in projection along an optical axis perpendicular to the base surface the outer contour of the reflective surface falls within the outer contour of the first surface. This yields the advantage that the TIR-body is easy to manufacture as the shape of the TIR-body is continuously tapering in a direction from the base surface towards the reflective surface. It is thus enabled to manufacture the TIR-body via injection moulding with a simple tool for which no moving parts are required.

In an embodiment the illumination device is characterized in that the reflective surface is satinized. It is thus enabled for a fraction of the light impinging on the reflective surface to exit through the reflective surface, hence under non-acute angles to the base surface and providing light onto an area directly opposite/behind the reflective surface. Thus a relatively homogenous illumination of the area/shelves is obtained.

The illumination device is usable as an illumination device for displays or for cupboard shelves, or in freezers, or as wall washers and for floor illumination, for example as safety or emergency lighting.

The illumination device can be rotationally symmetric around an optical axis through the light source and perpendicular to the base surface, however, it could have other shapes, for example an elongated shape in one direction along the base surface.

Alternatively the rotationally symmetrical illumination device could be cut into two halves along the optical axis thus creating a cut surface, which cut surface could be made reflective, for example by providing it with a reflective coating, for example a dichroic coating or a silver layer. Said halves are in particular suitable for use as light sources at the end of a number of illumination devices arranged in a strip and mounted behind the door mullion in freezers.

Freezer provided with an illumination device according to any of the claims 1 to 9.

### BRIEF DESCRIPTION OF THE DRAWINGS

The invention now will be further elucidated by the drawing in which,
Fig. 1 is a schematic cross section in top view of freezers provided with a first embodiment of an illumination device according to the invention;
Fig. 2 is a detailed cross section of a second embodiment of an illumination device of the invention;
Fig. 3 shows a graph of the uniformity of the illumination on target plane as obtained by the illumination device of Fig. 2;
Fig. 4 shows an angular graph of the intensity profile as shelf distances of 60 mm as obtained by the illumination device of Fig. 2;
Fig. 5a shows a perspective view towards the base surface of the illumination device of Fig. 2;
Fig. 5b shows a perspective view towards the reflective surface of the illumination device of Fig. 2.

### DETAILED DESCRIPTION OF THE DRAWINGS

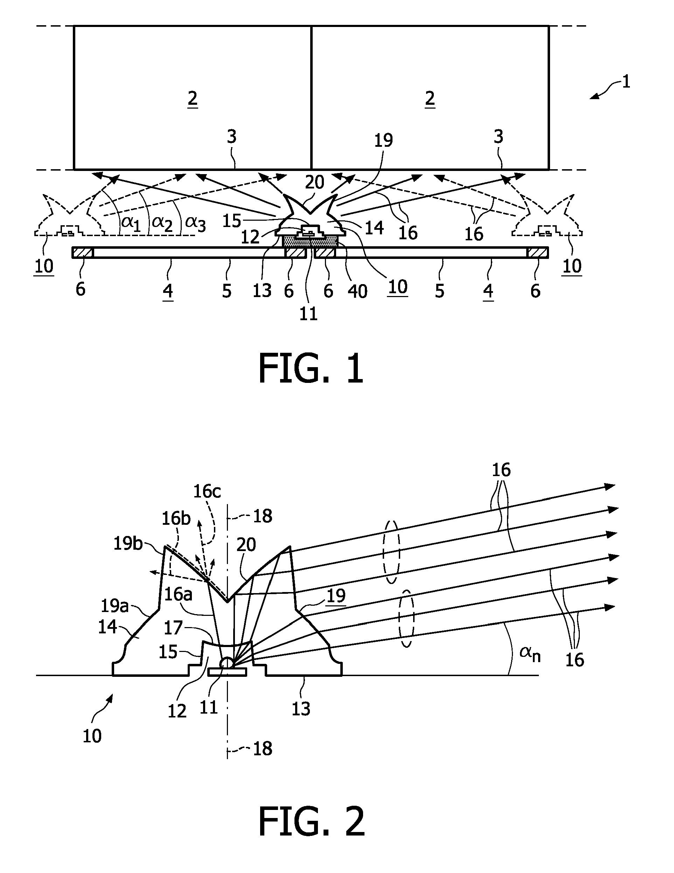

In Fig. 1 a schematic cross section in top view of a freezer 1 is shown. The drawing is not to scale, for clarification some elements are exaggerated in size. The freezer has shelves 2, of which only one pair is visible. The shelves have a front side 3 facing doors 4 of the freezer. Each door has a transparent window 5 and a frame 6 which abuts a mullion 40. Adjacent/behind each mullion a respective array of illumination devices 10 is provided. The array of illumination devices extends perpendicular to the plane of the drawing. Each illumination device is provided with a light source 11, in the Figure a LED which is positioned in a cavity 12 at a base surface 13 of a solid totally internal reflective body (TIR-body) 14 of transparent material, in the Fig. of PMMA, but which could alternatively be made of other transparent plastic/synthetic material, for example polycarbonate, or glass. The cavity has a light entrance surface 15 which in the Fig. is not provided with a lens or lens structure, resulting in the TIR-body to have in directions alongside the doors a reflective surface 20 that is still relatively spacious compared to a refractive surface 19. Light rays 16 originating from the light source 11 during operation are directed, either after being refracted or reflected and refracted, under an angles αₙ (n= 1, 2, 3...) with the base surface 13 alongside the front side 3 of the shelves 2.

In Fig. 2 a detailed cross section of a rotationally symmetric illumination device 10 is shown. The illumination device is provided with a light source 11, in the Figure a LED which is positioned in a cavity 12 at a base surface 13 of a totally internal reflective body (TIR-body) 14 of transparent material, in the Fig. of glass. The cavity has a light entrance surface 15 which in the Fig. is provided with a lens 17 resulting in the TIR-body to have in directions alongside the base surface 13 a reflective surface 20 that is relatively small-sized compared to the refractive surface 19a. Refractive surface 19 comprises a first 19a and a second surface 19b. Light rays 16 originating from the light source 11 during operation are directed, either after being refracted by the first surface 19a or reflected at the reflective surface 20 and subsequently refracted at the second surface 19b of the TIR-body, under an angles αₙ (n= 1, 2, 3...) with the base surface 13 alongside the front side 3 of the shelves 2, in the Fig. αₙ is about 7°. The lens 17 is integral with the TIR-body and enables the TIR-body to be relatively compact, meaning that in projection along an optical axis 18 on a plane defined by the base surface 13, the reflective surface has a contour which falls within a contour of the first surface 19a. Furthermore is shown in Fig. 2 the effect of the reflective surface 20 being modified, for example by sand blasting or etching, resulting in a satinized surface (shown in the left part of reflective surface in Fig. 2). Light rays 16a impinging on said satinized surface are reflected for the major part, resulting in light rays 16b. A relatively small part of the light rays 16a, however, are diffusely scattered by the satinized surface, resulting in light rays 16c. It is thus enabled for a fraction of the light impinging on the satinized surface to exit through said surface, hence under non-acute angles to the base surface and providing light onto an area directly opposite/behind the reflective surface.

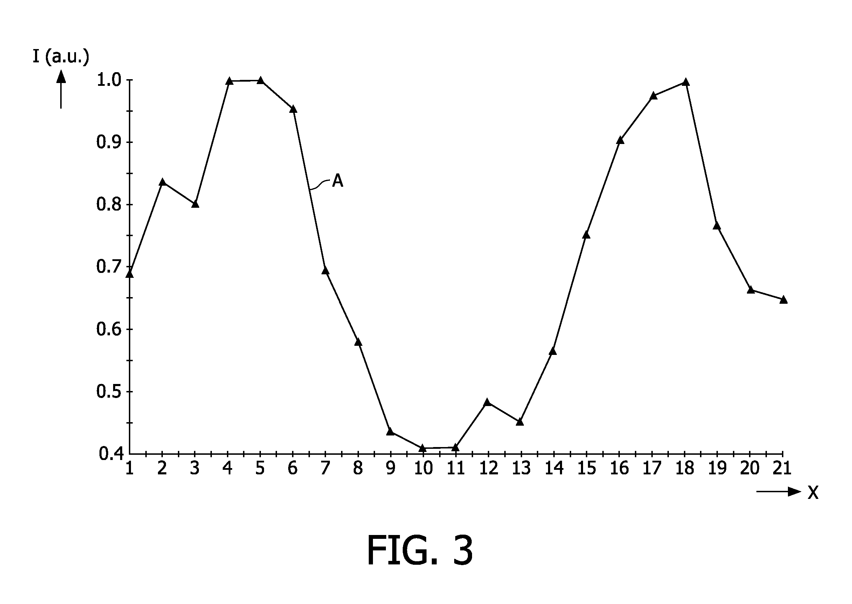

Fig. 3 shows a graph of the uniformity of the illumination as obtained by the illumination device of Fig. 2. The combination LED-lens is designed such that the front of the shelves is illuminated as uniformly as possible. As shown in figure 1, the shelves are illuminated from both sides. The sum of both illuminations has this uniformity, see curve A. The illumination distribution from a single side is a linear decay from the LED-module to the other side of the door, but other luminance distributions are possible as long as the desired uniformity is obtained.

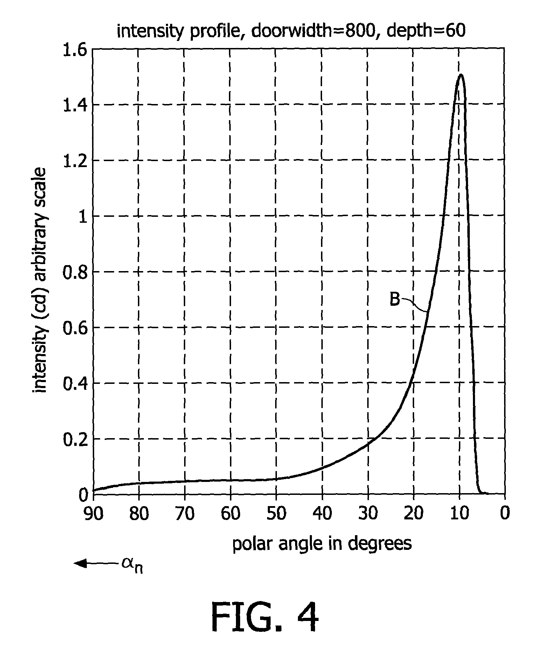

Fig. 4 shows a graph of the intensity profile as shelf distances of 60 mm as obtained by the illumination device of Fig. 2. In order to obtain a good uniformity the intensity profile of light source and TIR-body should have a shape typically as shown in curve B of Fig. 4. The FWHM (full width at half maximum) is typically small and depends on the distance between the light source module and the front of the shelves. This means that most of the light from the TIR-body must have a high degree of collimation.

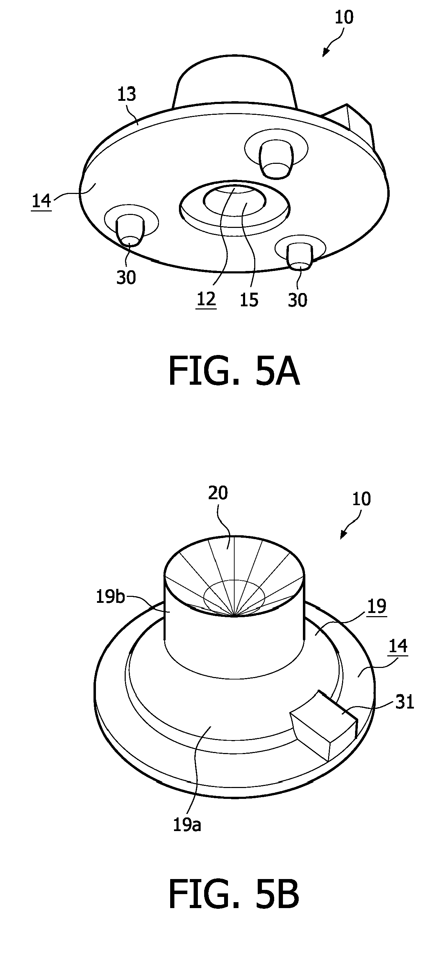

Fig. 5A and 5B show a perspective view towards the base surface respectively a perspective view towards the reflective surface of the TIR-body 14 of the illumination device 10 of Fig.2. In Fig. 5A the base surface 13 having the cavity 12 is shown, the cavity having the light entrance wall 15. The base surface 13 is provided with protrusions 30 via which the illumination device can be attached to a carrier, for example a door of a freezer. In Fig. 5B both the refractive surface 19 and the reflective surface 20 are shown. The refractive comprises the first surface 19a and the second surface 19b. The TIR-body further is provided with an alignment protrusion 31 which could be provided with or comprise a connection to an electrical power supply.

## Claims

1. An illumination device comprising:
a totally internal reflective body (TIR-body) of transparent material which substantially hemispherically surrounds a light source which is provided in a cavity at a base surface of the TIR-body, the TIR-body further comprising:
- a light entrance surface of the cavity facing said light source and hemispherically surrounding said light source;
- a reflective surface substantially opposite the entrance surface for directing light rays originating from the light source under an acute angle αₙ with the base surface after being reflected during operation of the illumination device, and
- a refractive (side) surface extending between the base surface and the reflective surface for directing light rays originating from the light source under an acute angle αₙ with the base surface during operation of the illumination device,
**characterized in that** the light entrance surface is located at a distance from the light source for allowing a first refraction of light of light rays originating from the light source upon entering the TIR-body due to the absence of optical contact between the light source and the TIR-body.

2. An illumination device as claimed in claim 1, **characterized in that** the light entrance surface is provided with a lens (structure) for preparative collimation of light rays originating from the light source during operation of the illumination device

3. An illumination device as claimed in claim 1, **characterized in that** the lens (structure) is provided on a wall of the light entrance surface opposite the base.

4. An illumination device as claimed in claim 1, **characterized in that** the light source is a LED.

5. An illumination device as claimed in claim 4, **characterized in that** the LED is a (white) LED having an emission spectrum during operation which has a color temperature in the range of 2500K to 10000K, preferably an emission spectrum during operation which is according to a daylight spectrum in the range of 4000K to 6500K.

6. An illumination device as claimed in claim 4, **characterized in that** the LED during operation emits a color spectrum chosen from the group consisting of red, green, blue and amber.

7. An illumination device as claimed in claim 1, **characterized in that** the base is in thermal connection with a cooling device, preferably a heat pipe or a peltier element.

8. An illumination device as claimed in claim 1 wherein the refractive surface comprises a first and a second surface, the first surface is curved and extends from the base surface to the second surface, the second surface extend from the first surface to the reflective surface, **characterized in that** in projection along an optical axis perpendicular to the base surface the outer contour of the reflective surface falls within the outer contour of the first surface.

9. An illumination device as claimed in claim 1, **characterized in that** the reflective surface is satinized.

10. Freezer provided with an illumination device according to any of the claims 1 to 9.
